# EUROPEAN PATENT APPLICATION

(11) **EP 1 883 180 A2**
(43) Date of publication of application: **30.01.2008**
(21) Application number: 07112796.3
(22) Date of filing: 19.07.2007
(51) Int. Cl.: H04L 12/24

(54) **System and method of managing a computer network using hierarchical layer information**

(30) Priority: 26.07.2006 US 492839
(71) Applicant: Hewlett-Packard Development Company, L.P., Houston, TX 77070 (US)
(72) Inventor: Zhu, Qi, Cupertino, CA 95014-0691 (US); Huibregtse, Tom, Ft. Collins, CO 80528-9599 (US); Hedge, Praveen, Cupertino, CA 95014-0691 (US)
(74) Representative: Lloyd, Richard Graham

(57) **Abstract**

A system and method are disclosed for managing a computer network using hierarchical layer information comprising querying a device of the network to acquire information, determining a hierarchical layer of the device using the information, and storing information regarding the hierarchical layer of the device in a memory of a network management system.

## Description

Networks, such as computer networks, are configured using any of a variety of network design models. One such model uses hierarchical network design, wherein a network is configured by classifying each device as being within a particular layer. Exemplary hierarchical design specifies such layers as, for example, an access layer, a distribution layer and a core layer.

Hierarchical network design is used for local area network (LAN) and wide area network (WAN) applications. Inter-networks are configured in layers to implement an OSI reference model, so that a focused layer-related function can be implemented for each device. Hierarchical network design provides route summarization that can reduce routing protocol overhead on network lengths and reduce routing protocol processing within routers.

Each hierarchical layer in a hierarchical network design can provide functionality to the network, and can possess specific characteristics. However, after a network has been configured using hierarchical network design, the devices of the network do not include layer characterization information. A network view available on a user interface to a network administrator simply illustrates connectivity of the network devices without regard to any inter-network layers used in the initial design. An exemplary network view would simply show all network devices without any depiction of their hierarchical layer categorization. Software tools included in the network management system have no ability to determine the hierarchical layer of each network device.

A method of managing a computer network using hierarchical layer information is disclosed which comprises: querying a device of the network to acquire information about the device; determining a hierarchical layer of the device using the device information; and storing information regarding the hierarchical layer of the device in a memory of a network management device.

A system for managing a computer network using hierarchical layer information is disclosed which comprises: a network management computer having a module for automatically discovering a hierarchical layer of a device added to a network; a memory for storing information regarding the hierarchical layer of the device; and a display for hierarchically displaying devices of the network as a function of a hierarchical layer attributed by the module to each device of the network.

The accompanying drawings provide visual representations which will be used to more fully describe the representative embodiments disclosed herein and can be used by those skilled in the art to better understand them and their inherent advantages. In these drawings, like reference numerals identify corresponding elements, and:
Figures 1A and 1 B show an exemplary system for managing a computer network using hierarchical layer information; and
Figure 2 shows an exemplary method which can be implemented by the Figure 1 system.

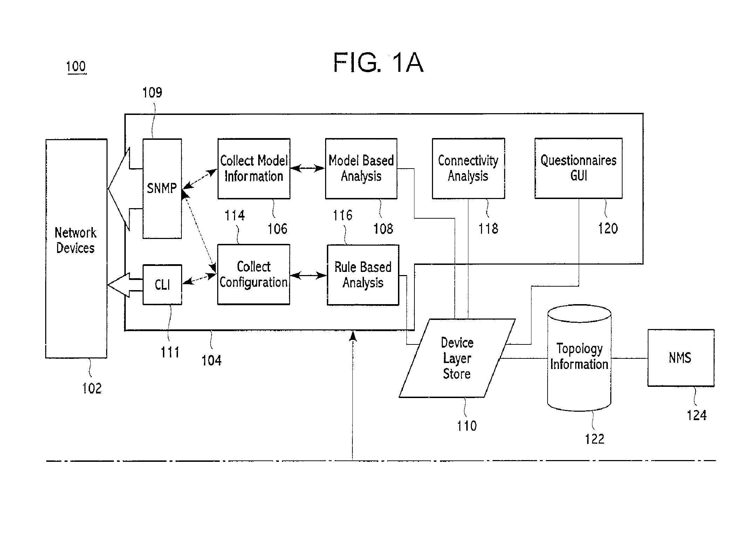

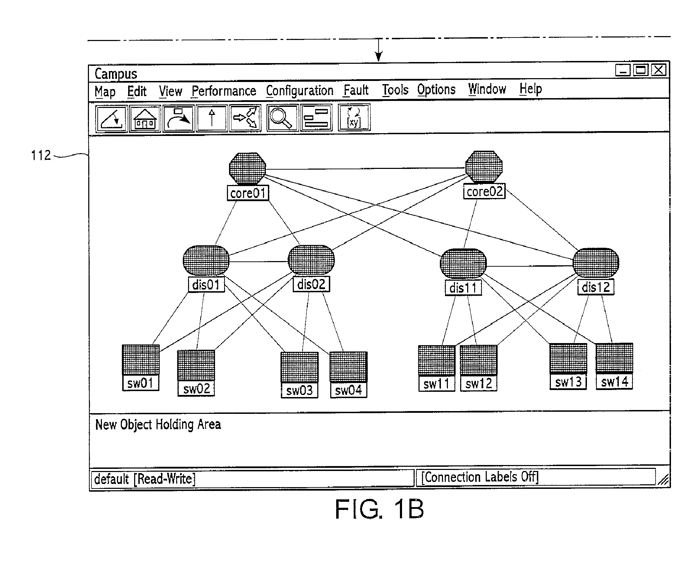

Figures 1A. 1 B (collectively Figure 1) illustrate a system 100 for managing a computer network, such as a network 102 of interconnected network devices, using hierarchical layer information. The system 100 includes a network management computer 104 having a module for automatically discovering a hierarchical layer of a device added to the network device.

In the exemplary Figure 1 embodiment, the network management computer 104 includes a module 106 for collecting model information of a device added to the network 102 and an associated module 108 for performing a model based analysis of the collected device model information. Using the modules 106 and 108, device model information obtained from a device can be used to classify the device as at least one of an access layer device, a distribution layer device, and a core layer device.

The device model information can be acquired through device queries, such as Simple Network Management Protocol (SNMP) queries 109 from an SNMP stack to a management information base (MIB), and/or through commands, such as Command Line Interface (CLI) commands 111 from a CLI stack. After obtaining information from a network device, a database included, for example, in a memory 110, can be accessed to identify a hierarchical layer associated with the device model information. A hierarchical layer associated with the device model information can be assigned to the device, and the database in memory 110 can be updated to associate the device with a hierarchical layer assigned thereto.

In an exemplary hierarchical layer network, the association of a device model to a particular layer can be sufficient to classify at least some devices. This is because each layer of a hierarchical network provides functionality to the network, and can be configured to have specified characteristics which correlate well with certain types of devices.

An exemplary set of core layer characteristics can include: (1) provide optimal transport between sites using, for example, a high speed backbone; (2) provide enhanced reliability; (3) provide redundancy; (4) provide fault tolerance; and/or (5) avoid slow packet manipulation caused by filters or other designated processes. The layer characteristics of any layer can, of course, be configured in any manner desired, and the foregoing list for a core layer is by way of illustration only.

An exemplary distribution layer can be configured to possess characteristics such as: (1) aggregate access layer equipment using, for example, address or area aggregation or summarization; (2) provide policy-based connectivity to, for example, ensure that traffic sent from a particular network should be forwarded out one interface, while other network traffic should be forwarded out a different interface; (3) provide load balancing, and provide redundancy for the access layer devices via, for example, a Spanning-Tree Protocol/Hot Standby Router Protocol (STP/HSRP); (4) filter by source or destination address; (5) filter on input and output ports; (6) provide security, such as deployment of access control list (ACLs) for virtual local area network (VLANs) on VLAN interfaces; (7) provide routing between VLANs; (8) provide static routing; (9) provide media translations between protocols, such as between Ethernet and Token-Ring; (10) redistribute routing domains, such as between different routing protocols; and/or (11) provide demarcation between static and dynamic routing protocols.

Exemplary access layer characteristics can include: (1) provide work group/user access to the network; (2) run STP to avoid loops; and (3) provide quality of service (QoS) boundaries for classifying packets. Again, the foregoing lists are intended to be illustrative, and those skilled in the art will appreciate that the various layers of the hierarchical layer network can be designed in any suitable fashion.

Additional layers can be use in the hierarchical layer design as well. For example, in addition to the core, distribution and access layers, additional layers such as a collapsed core layer can be used during the network design. An exemplary collapsed core layer can include characteristics such as: (1) dual functionality as core and distribution layers; and (2) serve as a core layer which terminates VLANs and routes between them.

After a network has been configured and is operational, the discovered hierarchical layers of the network can be used to verify that the network devices are properly configured. For example, redundancy links between core layer devices can be verified. In addition, enablement of SPT can be verified when an access device is connected between two or more distribution devices.

By automatically discovering a hierarchical layer of each device in a network, network management can also be optimized. For example, in Internet Protocol Telephony (IPT) assessment, verification that the network is properly designed and running in an optimized fashion can be assured, and a network hierarchical layer view can be produced.

For example, in addition to including memory, such as the memory 110 for storing information regarding the hierarchical layer of each device, the system 100 can include a display 112. The display 112 can be used for hierarchically displaying devices of the network as a function of a hierarchical layer attributed by the module or modules of the network management computer 104 to each device of the network.

The Figure 1 modules 106 and 108 can thus be used to collect device model information that in turn can be used to classify a device into a particular layer. However, the model information may be insufficient to definitively classify a device. Accordingly, alternate/additional classification techniques can be employed.

For example, in addition to the model based classification using device model information acquired via modules 106 and 108, alternate classification techniques can be used in accordance with the Figure 1 embodiment. For example, using the SNMP queries 109 and/or the CLI commands 111, device configuration information can be acquired and used to classify each device as at least one of an access layer device, a distribution layer device and a core layer device. Device configuration information can be acquired using a collect configuration module 114 and an associated rule based analysis module 116 of the network management computer 104. In an exemplary embodiment, device configuration information acquired from each device is provided to the rule based analysis module 116, wherein rules are applied to classify the device.

A device can, for example, be classified as a core layer device when the device configuration information includes an ability of the device to perform packet manipulation. Such a device can be classified as being one of either a core layer device or a collapsed core layer device. A device can be classified as a collapsed core layer device when the device configuration information includes an ability of the device to perform functions of a core layer device and a distribution layer device.

The device can be classified as an access layer device when, for example, the device configuration information includes an ability of the device to perform: at least one computer connection via a downlink, STP, and quality of service (QoS) for classifying packets.

The device can be classified as a distribution layer device when the device configuration information includes an ability of the device to perform at least one of policy-based connectivity, filtering by source or destination address, filtering on input or output ports, routing between VLANs, static routing, deployment of ACLs for VLANs on VLAN interfaces, and balancing or redundancy for the access layer via STP/HSRP.

In addition to providing device classification based on device model information and/or device configuration information, classification can be based on connectivity. That is, the device information can include alternately, or in addition, connectivity information of the device to other devices in the network. In an exemplary embodiment, connectivity analysis can be performed using a connectivity analysis module 118. Topology information that provides connectivity information can, for example, be stored in a database 122. This information can be updated/modified using a network management system (NMS) 124. The module 118 can access the database 122 to determine connectivity of the device to neighboring devices within the network, and assess a hierarchical layer of the device based on hierarchical layer information of the neighboring devices.

For example, if a device is connected to a known core device, and a known access device, it can be inferred that the device is a distribution device. In an exemplary hierarchical design, the following links are valid:
a core device can connect to a core device
a core device can connect to distribution device
a distribution device can connect to a core device
a distribution device can connect to an access device
an access device can connect to a distribution device
an access device can connect to a leaf node.

Where a device cannot be classified using model based classification, rule based classification or connectivity based classification, performed in any order or in any desired combination, the network management computer 104 can be configured to initiate a questionnaire based analysis via a graphical user interface (GUI) associated with the display 112. Such a questionnaire can be configured as a template that can prompt entry of information by the user (such as model information, connectivity information or other information), and allow the user and/or network management computer (using, for example, a look up table that is accessed on the basis of user inputs) to then make a device layer classification. A questionnaire GUI module 120 of the network management computer 104 can be provided in combination with the display 112 to achieve such functionality.

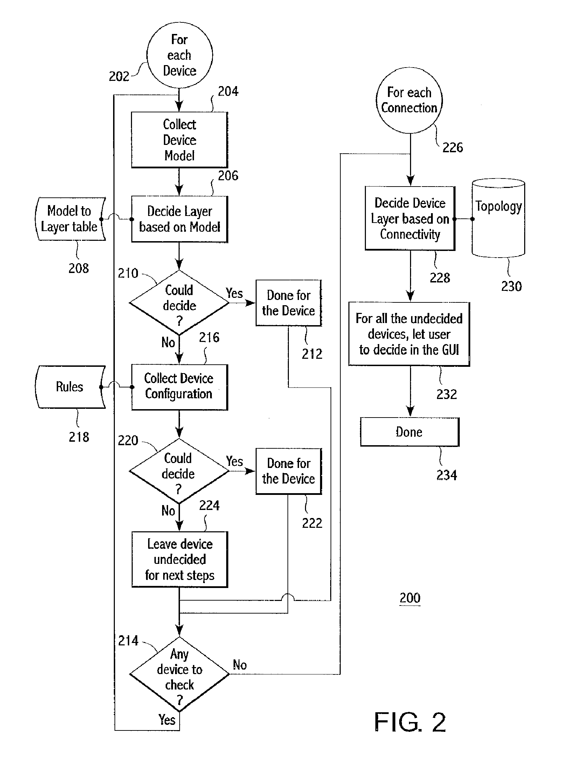

Details retarding exemplary aspects of the software modules illustrated in the Figure 1 embodiment will now be described with respect to the flow chart of Figure 2. Figure 2 illustrates an exemplary method of managing a computer network using hierarchical layer information. The Figure 2 method includes querying a device of a network to acquire information about the device. This querying begins in block 202 wherein for each device, device model information is collected in step 204.

The device model information can be used to classify the device as at least one of an access layer device, a distribution device, and a core layer device. Classification based on device model information is based on each device model having a targeted function role in the network from device vendors, and correlating that target function role to a layer of the hierarchical network design.

Device model information can be retrieved from a device automatically using the SNMP MIB queries 109 from a SNMP stack of Figure 1. Such queries can be used to collect information from SNMP enabled network devices. Alternatively, CLI commands 111 from the CLI stack of Figure 1 can be used to collect information from network devices.

A model-to-layer table 208 can be provided in memory to map device model information to the role the device would be expected to assume within the network. The table, which can be in the form of look-up table, that can be used to determine the role or roles of the device. The table can be updated and maintained for any supported vendors. An exemplary table that maps functionality of CISCO devices to a layer or layers is shown in Table I as follows:

**Table I: Table of Candidate Cisco Devices for Each Hierarchical Layer**

| **Product** | **Layer** | **Features** |
|---|---|---|
| Cisco Small Business (SB) 100 Series | Access | Fixed-configuration, small-office secure broadband routers that support up to five users |
| Cisco 800 Series | Access | Integrated services routers allow small offices to operate secure concurrent services, including firewall, VPNs, and wireless LANs, at broadband speeds. |
| Cisco 1800 Series | Access | Modular and fixed architectures-Offers wide variety of LAN and WAN options; network interfaces on Cisco 1841 are field-upgradeable to accommodate future technologies. Fixed configuration models offer 10/100 ethernet, ADSL over ISDN, ADSL over POTS, or G.SHDSL WAN interfaces with integrated ISDN BRI (1801, 1802, 1803, and 1812) or analog modem (1811) backup interfaces. |
| Cisco 1700 Series | Access | Flexible, secure, modular access routers. 1-port autosensing 10/100 Fast Ethernet LAN. Modular slots support a wide variety of WAN and voice interface cards. |
| Cisco 2800 Series | Access Distribution | Integrated services routers that are optimized for the secure, wire-speed delivery of concurrent data, voice, and video services for small- to-midsize business routing. Superior performance with services enabled for 1-6 TI/EI links. Advanced security features including Stateful Firewall, IPS, VPN. |
| Cisco 2600 Series | Distribution | Modular multiservice router. Single or dual LAN (10/100 Mbps Ethernet and Token Ring/Ethernet options). Wide variety of interface support, including integrated 16-port switching, high-density analog and digital, voice, Cisco 105 Firewall and VPN, Content, async and sync serial, ISDN, Fractional and channelized T1/E1, Ethernet, analog modems, ADSL, G.SHDSL, switching integration, and ATM support. |
| Cisco 3800 Series | Distribution Core | Integrated Services Routers. Highest performance and densities with the ability to run concurrent data, security, voice, and advanced services at wire speed up to T3/E3. Higher availability and resiliency with Online Insertion and Removal (OIR); redundant system and inline power options. High-speed WAN Interface Cards (HWIC5) free up network module slots for other services. |
| Cisco 3700 Series | Access | Modular multiservice high-density access router. Enable higher levels of application and service integration in enterprise branch offices in a small form factor. Wide variety of interface support, high-density analog and digital, voice, Cisco LOS Firewall/IRS and VPN, Fractional and channelized TI/EI, T3/E3, DS3, E3 and OC-3 ATM, Ethernet, Gigabit Ethernet and DSL. |
| Cisco 7200 Series | Access Distribution | WAN-edge router providing intelligent services, modularity, high performance, investment protection, and scalability in a small form factor. Modular 3 RU Chassis. 4- or 6-slot models and choice of system processors for up to 1 Mpps performance. Wide variety of LAN and WAN options, including Ethernet, Fast Ethernet, Gigabit Ethernet, Token Ring, FDDI, serial, ISDN, HSSI, ATM, Packet over SONET, DPT/RPR |
| Cisco 7300 Series | Access Distribution | Network Edge router with high performance IP services delivered at optical speeds for service providers and enterprise networks. Compact and modular 4 rack unit chassis-4 slots. High performance connectivity-T3 through 0C48/STMI6 with 3.5 Mpps performance. Built-in Gigabit Ethernet connectivity. Multiprotocol routing: IP, IPX, AppleTalk, DLSw. |
| Cisco 7500 Series | Distribution Core | High-end services-enabled core and WAN aggregation router for enterprise and service provider applications. |
| Cisco 7600 Series | Distribution Core | Consolidated WAN/MAN/LAN in a single platform. Scalable backplane bandwidth from 32 Gbps to 720 Gbps and performance from 30 Mpps to over 400Mpps with new Sup720 engine and distributed forwarding line cards. High-volume aggregation of service-enabled Ethernet. Wide range of WAN/MAN interfaces from NxDSO, Ti, T3 to OC-48 with line rate services. |
| Cisco 10000 Series | Core | Service provider-class edge services router. Physical interface speeds from E1/TI up to OC-48c/STM-16c |
| Cisco 10700 Series | Core | Service provider-class metro edge services router. Equipped with either (24) 10/100 or 4 GbE and 8 FE ports for customer access and OC-48c/STM- 16c dynamic packet ransport/resilient packet ring (DPT/RPR) technology or Packet Over SONET (POS) for metro optical connectivity. |
| Cisco XR 12000/12000 Series | Core | Service provider-class multiservice-edge router to enable customer to transition toward a converged IP Network Infrastructure. |
| Catalyst 2940 Series | Access | Fixed-configuration Ethernet switches. Autosensing 48 10/100/1000BASE-T ports and 4 small form-factor pluggable (SFP) ports, providing a total of 52 Gigabit Ethernet ports. |
| Catalyst 2948 Series | Access | Fixed-configuration 10/100 Ethernet switches. 8 10/100 ports ± 1 10/100/1000BASE-T port (WS-C2940-8TT-S). 8 10/100 ports ± 1 100BASE-FX or SEP port (WS-C2940-8TF-S). |
| Catalyst 2950 Series | Access Distribution | Fixed-configuration basic and Intelligent Ethernet 10/100 switches. 12/24/48 10/100 port managed switches with stackable and standalone models. Flexible uplink options: fixed 100Base FX, fixed 1000BaseT, fixed 1000BaseSX, and GBIC-based ports. Models with the Standard Image software (SI) provide Layer 2 Cisco 105 functionality for basic data, voice, and video services at the edge of the network. Models with the Enhanced Image software (EI) bring Layer 2-4 intelligent services such as advanced Quality of Service, rate limiting, security filtering and multicast management capabilities. |
| Catalyst 2955 Series | Access Distribution | Industrial-grade, rugged models (Catalyst 2955) for harsh environment deployments. 12/24/48 10/100 port managed switches with stackable and standalone models. Flexible uplink options: fixed 100Base FX, fixed 1000BaseT, fixed 1000BaseSX, and GBIC-based ports. Models with the SI software provide Layer 2 Cisco 105 functionality. Models with the EI software bring Layer 2-4 intelligent services. |
| Catalyst 2970 Series | Access | Affordable Gigabit-to-the-desktop Ethernet switches that deliver wire-speed intelligent services for small and medium-sized businesses and enterprise branch offices. |
| Catalyst 3560 Series | Access | Fast-Ethernet and Gigabit-Ethernet configurations. |
| Catalyst 3750 Series | Access | Provides the highest levels of resilient stacking via Cisco StackWiseT technology, intelligent network services, and Gigabit Ethernet optimization. Provides configurations that can be interconnected and stackable up to 9 switches |
| Catalyst 4948 Series | Access Distribution | High performance fixed Gigabit Ethernet switch with intelligent enterprise Cisco IOS services |
| Catalyst 4500 Series | Distribution Access | Modular switch with integrated intelligent L2-L4 services for converged networks in enterprise LAN Access, Layer2/Layer3 distribution, SMB and branch office. Up to 384 ports of Fast Ethernet or Gigabit Ethernet over Fiber or Copper with wire-speed 10 Gigabit Ethernet Uplinks. High performance, Layer 2/3/4 switching up to 136 Gbps and 102 Mpps. Advanced network control with predictable performance, granular QoS, advanced security and web-based Network Management |
| Catalyst 6500 Series | Distribution Access Core | High-performance, multilayer switch with integrated intelligent services for enterprise campus backbones, wiring closets, server aggregation, or internet data centers Up to 1152 10/100 ports and 577 10/100/1000 ports, up to 410 high performance Gigabit Ethernet ports, up to 32 10GE ports, multigigabit L4-7 and Security Services such as Firewall, Intrusion Detection and Load Balance. Layer 4-7 services. Up to 720 Gbps of switching capacity and Packet throughput scalable to 425 Mpps IPv4 (200 Mpps IPv6) |
| Catalyst 8500 Series | Distribution Core | High-performance, modular, multimedia switch router. Wire speed, nonblocking IP, IPX, IP multicast Layer 3 switching. Multiple interface options. |

In the Figure 2 method 200, classification of a device based on device model information is performed in block 206 using the exemplary model-to-layer table 208 which can, for example, be included within the memory 110 of Figure 1.

A separate decision table can be maintained in the system to track the hierarchical layer classifications for all devices in the network. An exemplary decision table subsequent to the exemplary model based classification, for a set of network devices labeled "device01" through "device08," is shown in Table II as follows:

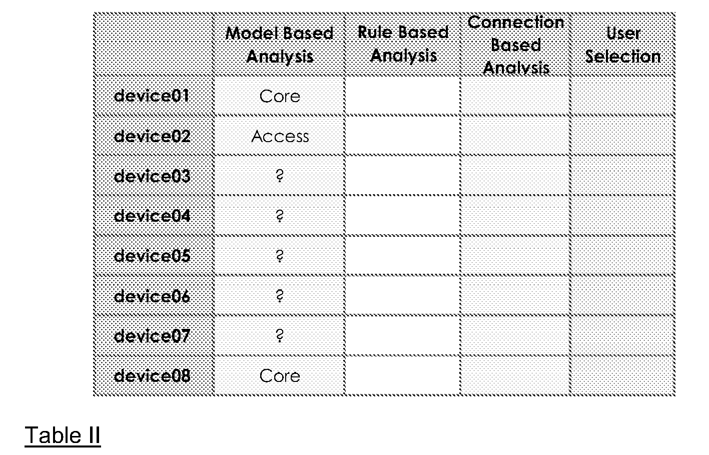

The foregoing table shows that the hierarchical layer devices: device01, device02, and device08 have been identified based on the acquired device model information. However, hierarchical layer information remains unknown, or inconclusive, for the remaining devices.

In a decision block 210 of the Figure 2 method, if a classification decision can be positively made based on the collected device model information and the look-up table, then classification is completed for that device in block 212 and operational flow proceeds to decision block 214 to determine whether any other devices need to be classified.

For devices where device model information was inconclusive, operational flow proceeds to block 216 to perform classification based on device configuration information. In block 216, configuration information is obtained from the device using, for example, queries of specific MIB objects. For example, a query can be as follows:
query q MIB II sysObjectID(1.3.6.1.2.1.1.2) and get value 1.3.6.1.4.1.9.1.413. Look-up CISCO-PRODUCTS-MIB to determine CISCO 2691 router

Upon collecting device configuration information using, for example, the collect configuration module 114 of the Figure 1 network management computer 104, a set of rules can be applied to the collected information. In an exemplary embodiment, network device configuration information can include such information as STP configuration, HSRP and so forth, obtained via SNMP queries or CLI commands or any desired method. Rules can be stored in the memory 110 and accessed in the Figure 2 flowchart via the rules block 218.

The initial acquisition of device model information, even in cases where the information is conclusive, can be verified using the device configuration information. Exemplary rules which can be applied to determine device layer have been discussed with respect to the rule based analysis module 116 of Figure 1. Applying these exemplary rules, modifications can be made to the decision table to arrive at a modified decision table, Table III, as follows:

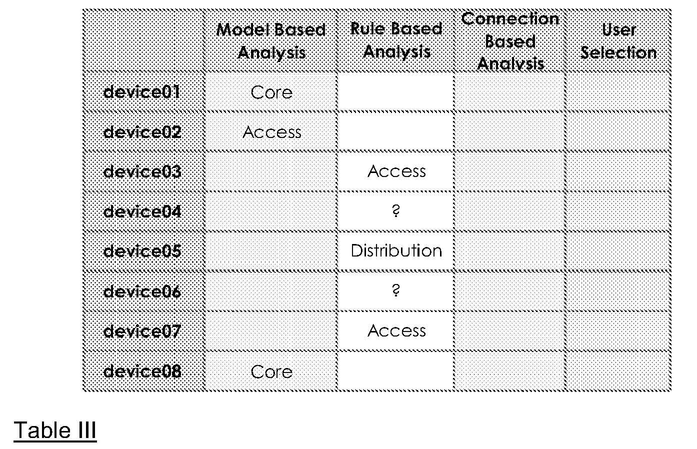

In the foregoing modified decision table, it can be seen that device03 runs STP and is classified as an access layer device (e.g., access switch) based on the exemplary rules described previously. Device05 has port filtering enabled, and is classified as a distribution layer device. Device07 has 48 downlinks and is classified as an access LAYER device. The devices: device04 and device06 remain unclassified.

Referring to the Figure 2 flowchart, for each device which can be conclusively classified into a layer using the device configuration information, a decision block 220 directs operational flow to block 222. Any remaining devices are passed to block 224 for further analysis.

For devices which have yet to be classified, operational flow in Figure 2 proceeds to analyze connections associated with those devices in block 226. Here, a device's immediate neighbor layer information is accessed to classify the device layer. For example, a device connected to a known core device and a known access device is considered with high probability to be a distribution device. In an exemplary hierarchical layer design, exemplary links have been discussed with respect to the connectivity analysis module 118 of Figure 1. In the Figure 2 block 228, a classification decision is made on a device layer based on the connectivity information collected. In the example described herein, a decision table, Table IV, can be updated based on exemplary connection based classification information as follows:

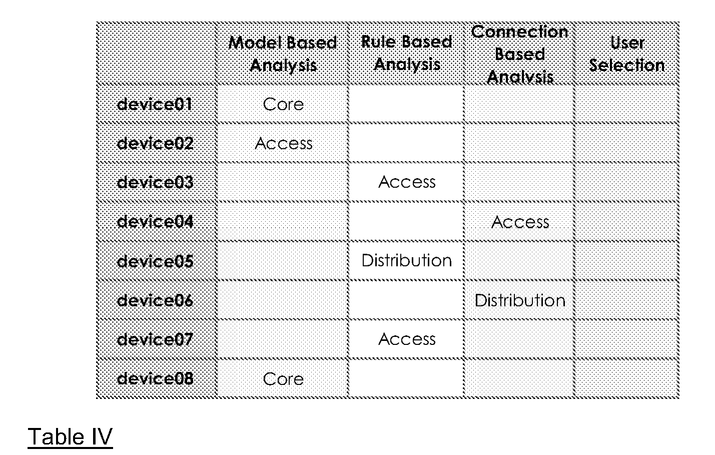

In the foregoing decision table, device04 connects to a distribution device and has no connection to any core device; as such, device04 is classified as an access layer device. Device06 connects to both a core device and a distribution device, and is classified as a distribution layer device. As such, all of the devices shown in the table have been classified into a hierarchical layer.

If all efforts to classify devices have, however, been exhausted and some devices remain unclassified, operational flow proceeds to block 232 wherein the user can be provided with a template for use in deciding how to classify the device. A device may, for example, be unknown to the system or possess multiple possible roles. A questionnaire GUI can be started by the network management computer and allow the user to assign an access layer to the device. Alternatively, based on user responses to a template, the network management computer can assign a layer to each unclassified device using criteria similar to that already discussed.

When all devices have been classified, operational flow of the Figure 2 method is complete as illustrated by block 234.

Those skilled in the art will appreciate that the classification techniques described herein can be applied in any desired order and/or combination. Similarly, information can be stored in any number of databases at any desired location.

## Claims

1. A method of managing a computer network using hierarchical layer information comprising:
querying a device of the network to acquire information;
determining a hierarchical layer of the device using the information; and
storing information regarding the hierarchical layer of the device in a memory of a network management system.

2. A method as claimed in claim 1, wherein:
the device information includes device model information obtained from the device to classify the device as at least one of an access layer device, a distribution layer device and a core layer device.

3. A method as claimed in claim 1 or claim 2, wherein:
the device information includes device configuration information used to classify the device as at least one of an access layer device, a distribution layer device and a core layer device.

4. A method as claimed in claim 3 comprising:
applying at least one rule to the device configuration information to classify the device.

5. A method as claimed in claim 4, comprising:
classifying the device as a core layer device when the device configuration information includes an ability of the device to perform packet manipulation.

6. A method as claimed in claim 4 or claim 5, comprising:
classifying the device as an access layer device when the device configuration information includes an ability of the device to perform at least one computer connection via a downlink, spanning tree protocol and quality of service for classifying packets.

7. A method as claimed in any of claims 4 to 6, comprising:
classifying the device as a distribution layer device when the device configuration information includes an ability of the device to perform at least one of policy-based connectivity, filtering by source or destination address, filtering on input or output ports, routing between VLANs, static routing, deployment of ACLs for VLANs on VLAN interfaces, and balancing or redundancy for access layer.

8. A method as claimed in any of claims 4 to 7, comprising:
classifying the device as a collapsed core layer device when the device configuration information includes an ability of the device to perform functions of a core layer device and a distribution layer device.

9. A method as claimed in claim any preceding claim, comprising:
determining connectivity of the device to neighboring devices within the network; and
assessing a hierarchical layer of the device based on hierarchical layer information of the neighboring devices.

10. A method as claimed in any preceding claim, wherein:
at least some of the information is acquired via an interactive questionnaire that is completed via a graphical user interface.

11. A system for managing a computer network using hierarchical layer information using a method as claimed in any preceding claim, comprising:
a network management computer having a module for automatically discovering a hierarchical layer of a device added to a network;
a memory for storing information regarding the hierarchical layer of the device; and
a display for hierarchically displaying devices of the network as a function of a hierarchical layer attributed by the module to each device of the network.
